# EUROPEAN PATENT SPECIFICATION

(11) **EP 1 153 658 B1**
(45) Date of publication and mention of the grant of the patent: **21.09.2005**
(21) Application number: 01111374.3
(22) Date of filing: 09.05.2001
(51) Int. Cl.: B01J 35/00, B01J 37/02

(54) **Visible light response type photocatalyst**
Photocatalysator mit Empfindlichkeit für sichtbares Licht
Photocatalyseur d'un type sensible à la lumière visible

(30) Priority: 11.05.2000 JP 2000139246; 30.05.2000 JP 2000161298
(43) Date of publication of application: 14.11.2001
(73) Proprietor: ICHIKOH INDUSTRIES LIMITED, Tokyo 141-8627 (JP); Kuroda, Shinichi, Kiryu-shi, Gunma-ken 376-0052 (JP); Gunma Prefecture, Maebashi-shi, Gunma-ken (JP)
(72) Inventor: Miyashita, Kiyoshi, Maebashi-shi, Gunma-ken, 371-0851 (JP); Kuroda, Shinichi, Kiryu-shi, Gunma-ken 376-0052 (JP); Ubukata, Tsutomu, c/o Ichikoh Industries, Ltd., Isehara-shi, Kanagawa-ken 259-1192 (JP); Enomoto, Minoru, Ichikoh Industries, Ltd., Isehara-shi, Kanagawa-ken 259-1192 (JP)
(74) Representative: Grünecker, Kinkeldey, Stockmair & Schwanhäusser Anwaltssozietät

(56) References cited:
- EP-A- 0 978 494
- DATABASE WPI Section Ch, Week 199711 Derwent Publications Ltd., London, GB; Class A97, AN 1997-114133 XP002175350 & JP 09 001724 A (MATSUSHITA SEIKO KK), 7 January 1997 (1997-01-07)
- DATABASE WPI Section Ch, Week 199824 Derwent Publications Ltd., London, GB; Class J04, AN 1998-265407 XP002175351 & JP 10 085610 A (TOTO LTD), 7 April 1998 (1998-04-07)

## Description

### BACKGROUND OF THE INVENTION

### Background of the invention

### 1. Field of the Invention

This invention relates to a visible light response type photocatalyst. More particularly, this invention relates to a film for forming a visible light response type photocatalyst layer onto a base material surface.

### 2. Description of Related Art

Conventionally, an anatase type titanium oxide has attracted attention as a photocatalyst. When an ultraviolet ray with its wavelength shorter than 380 nm is irradiated to this catalyst, it is known as a "Honda-Fujishima effect", to cause an oxidization and reduction reaction such as water decomposition, for example. In addition, based on this effect, a variety of products are produced, where a titanium oxide film or thin film is formed on a base material surface, some of which are commercially available.

The photocatalytic properties of this titanium oxide can induce an oxidization and decomposition reaction by absorbing a slight amount of ultraviolet rays included in natural light such as sunlight. However, the wavelength of available light is limited to an ultraviolet ray with its wavelength equal to or shorter than about 380 nm which is equal to a band gap (about 3.2 eV) of titanium oxide.

Therefore, if the wavelength of this available light can be expanded to include a visible light region as well, even a light ray that does not include a ultraviolet ray (for example, in a room which a ultraviolet ray cut glass or under a fluorescent light) can have a photocatalytic activity. Such a function is available in a light or places well lit to the naked eye. Thus, production of a visible light response type photocatalyst has been attempted.

Such a photocatalyst includes photocatalysts in which ions such as chrome or iron are doped in titanium oxide (Japanese Patent Application Laid-open No. 9-192496). However, their performance has not been sufficient. A doping method of a Cu ion in a TiO₂, an ion injection method and the like have been researched and published. However, at present, these techniques are not practically established (for example, see Surface Chemistry, Volume 20, Second Issue, Pages 60 to 65 (1999)).

### SUMMARY OF THE INVENTION

It is an object of the invention to provide a visible light response type photocatalyst that utilize the light in the visible light region and that has superior photocatalytic properties.

It is another object of the invention to provide a film with properties in which this visible light response type photocatalytic layer is provided on the base material surface, whereby the light decomposition properties are provided to the base material by means of visible light, self cleaning properties are provided, and hydrophily can be maintained for a long period of time.

The Inventor, et al. found that the above objects could be achieved by providing a mixture layer of a titanium oxide and a silicon oxide on a titanium oxide layer as a result of earnest study in which a light absorption region for titanium oxide was expanded to include visible light. The present invention was made based on these findings.

That is, a visible light response type photocatalyst according to the present invention is characterized in that a mixture layer of a titanium oxide and a silicon oxide, and a silicon oxide layer are laminated, in order, onto the titanium oxide with the photocatalytic function. In addition, a hydrophilic film having self-cleaning properties according to the present invention is characterized in that a titanium oxide layer with a photocatalytic function, a mixture layer of a titanium oxide and a silicon oxide, and a silicon oxide layer are laminated, in order, onto a substrate. Further, the visible light response type photocatalyst and hydrophilic film according to the present invention are characterized in that the above mixture layer has a thickness of between 2 and 50 nm, or the preferably 5 and 50 nm, and the mixture rate of titanium oxide to silicon oxide is TiO₂ : SiO₂ = 5 to 95 : 95 to 5 in percent by weight, with the thickness of the silicon oxide layer being between 5 and 60 nm.

The hydrophilic film is not limited by the above described film thickness, and generally constitutes a so called thin film of 1 µM or less in film thickness or a coated film or coating film of several µM in film thickness.

The mixture layer of titanium oxide and silicon oxide according to the present invention denotes that a titanium oxide and a silicon oxide coexist in this layer. The relative content rate of these oxides may be continuously changed in the inter-film sectional direction or may be changed in steps. Alternatively, this rate may be a predetermined relative content rate and may remain unchanged.

This mixture layer may be laminated onto the titanium oxide layer so as to form an interface between the mixture layer and the titanium oxide layer. Although the thickness of this mixture layer may be generally about 2 nm or more, it is preferable that the thickness is practically about 5 to 50 nm or more preferably about 5 to 30 nm.

In the visible light response type photocatalyst of such a constitution, a mixture layer of a titanium oxide and a silicon oxide is coated onto the titanium oxide layer. Thus, it is considered that: a potential gradient (schottky barrier) is generated on an interface between this mixture layer and the titanium oxide layer; an interfacial level is formed; and as a result, a trap level is formed, and that can be excited by visible light (about 400 to 500 nm).

As a result of a space charge layer produced by the mechanism as described above, titanium oxide absorbs the light in the visible light region and is excited, the excited titanium oxide produces a positive hole (h+), the positive hole is diffused in the silicon oxide layer, reacts with water on the uppermost surface and produces hydroxy radical (OH ·). And the hydroxy radical oxidizes and decomposes organic materials adhered to the uppermost surface or the like.

Therefore, there is a possibility that the silicon oxide layer in the top layer hardly contributes to the photocatalytic function. However, if a titanium oxide layer is exposed, there may be problems with abrasion resistance, contamination resistance, water resistance, and chemical resistance. Thus, it is preferable that a silicon oxide layer is formed on a surface from a practical point of view, in order to avoid these problems. The silicon oxide provided in the top layer is 5 eV or more in band gap, and is transparent in visible and ultraviolet light. In addition, the thickness of the silicon oxide layer does not affect the light absorption properties of the visible light response type photocatalyst according to the present invention. However, it is preferable that it is not too thick in consideration of the diffusing properties of the positive hole produced by the titanium oxide. The film thickness is generally about 5 to 60 nm, preferably about 5 to 50 nm, and more preferably about 10 to 30 nm.

As described above, the top silicon oxide layer is not directly associated with the visible light response type photocatalytic function. However, in a case where a hydrophilic film is formed by employing the visible light response type photocatalyst according to the present invention, it is preferable that a silicon oxide layer is provided on the surface. This is considered to be not only because a hydroxy radical produced by water oxidization caused by the positive hole contributes to oxidization and decomposition of organic materials, but also because such a hydroxy radical is linked with Ti or Si on the film surface, and exists in a state such as "Ti-OH" or "Si-OH" , and deeply contributes to provision of hydrophily. In addition, in comparing the stability between "Ti-OH" and "Si-OH" that contribute to hydrophily thereof, the stability of the "Si-OH" is remarkably high.

Therefore, when the "Si-OH" occurs once, it exists in this state for a long period of time, and the hydrophily of the base material surface can be maintained. In contrast, in the case of the "Ti-OH" , it disappears within a short period of time, and the hydrophily of the base material surface cannot be obtained. Thus, in order to recover hydrophily of the base material surface, it requires light again, thereby forming "Ti-OH". Namely, even if the surface is placed for a long period of time in a state in which it is subjected to no light, it is preferable to provide a silicon oxide surface layer, in that there can be obtained a film capable of maintaining hydrophily for a long period of time.

A titanium oxide with a photocatalytic function employed in the present invention is preferably of an anatase type. Such crystalline titanium oxide can be obtained by forming a titanium oxide layer at a comparatively low temperature (250 to 850°C). An anatase type titanium oxide can be identified by the presence of a peak from a (101) plane represented at an angle of 2θ = 25.3° by way of X-ray diffraction. The thickness of the titanium oxide layer composed of a polycrystalline layer containing such anatase type titanium oxide is not particularly limited. The film thickness is preferably 100 nm or more in consideration of catalysis performance such as decomposition properties of organic materials such as oil and fat. In view of a practical aspect when a film is formed, in general, the film thickness is preferably about 150 nm to 1,000 nm.

Base materials for forming a film include ceramics, porcelain, glass, metal, and resin (preferably heat resistant) without being limited thereto. The film according to the present invention is formed on these surfaces, whereby photocatalytic activity can be provided, and a hydrophilic film with self-cleaning properties can be formed.

A variety of products to which the film according to the present invention is applied, include vehicle related products such as vehicle reaview mirrors, headlamp lens, reflectors, or light sources (bulb). The other products include air conditioner filters, air cleaners, indoor fluorescent lights, illumination equipment, construction material glass, and exterior wall without being limited thereto.

In cases where a general glass (soda lime glass) is employed as a base material, the sodium ions in the glass scatter in a titanium oxide film during high-temperature filming process, and a NaₓTi_{y}O_{z} layer is formed. This layer acts as a recombination center of an electron - positive hole pair, and the photocatalytic activity may be lost. In order to prevent this, it is preferable that a barrier layer, such as silicon layer, be interposed between a glass serving as a base material and the titanium oxide layer.

According to the photocatalyst of the present invention, a titanium oxide layer, a mixture layer of a titanium oxide and a silicon oxide, and a silicon oxide layer are laminated in order, whereby light of about 500 nm at its maximum wavelength can be utilized, and a visible light response type photocatalyst in which an absorption region has been expanded to the visible light region can be obtained.

In addition, according to the visible light response type photocatalyst of the present invention, a film having self cleaning properties can be obtained, the film providing an excellent effect that hydrophily can be maintained for a long period of time.

That is, utilizing the visible light response type photocatalyst according to the present invention can provide the photocatalytic function even in places where no ultraviolet rays are present (for example, in a vehicle chamber with ultraviolet ray cutting glass or under fluorescent light in a room). Thus, the photocatalyst according to the present invention can be utilized in places bright to the naked eye. In addition, the visible light response type photocatalyst according to the present invention also has a photocatalytic function under ultraviolet rays, and thus, its application range is extremely wide.

The present disclosure relates to subject matter contained in Japanese Patent Application No.2000-139246, filed on May 11, 2000,and Japanese Patent Application No.2000-161298 filed on May 30, 2000.

### BRIEF DESCRIPTION OF THE DRAWINGS

FIG. 1 is a schematic view showing a construction of a visible light response type photocatalyst according to the present invention.
FIG. 2 is a schematic view showing a state in which a titanium oxide and a silicon oxide exist in the sectional layer direction of a mixture layer.
FIG. 3 is an IR spectrum showing photocatalyst degradation of polystyrene on the visible light response type photocatalyst according to the present invention, where the number of waves (cm⁻¹) is taken on a horizontal axis, and the degree of absorption is taken on a vertical axis.
FIG. 4 is a graph depicting wavelength dependency of the irradiated light in photocatalyst oxidization degradation of polystyrene , where a plot of "●" indicates a case of photocatalyst oxidization degradation of polystyrene on a composite thin film on which the mixture layer according to the present invention is formed, and a plot of "□" denotes photocatalyst oxidization degradation of polystyrene on a conventional titanium oxide film on which such mixture layer is not formed.
FIG. 5 is a spectrum chart showing the measurement result of energy level in a valence electron band region obtained by XPS (ESCA).
FIG. 6 is a view showing spectrum characteristics of an ultraviolet ray cutting glass (Lamirex UV).
FIG. 7 is a graph depicting oxidization resolution of an organic material (engine oil) caused by the visible light of the visible light response type photocatalyst according to the present invention, and a degree of hydrophily on the surface by defining a contact angle as an indicator.
FIG. 8 is a graph depicting oxidization resolution of an organic material (engine oil) caused by the visible lights of the visible light response type photocatalyst according to the present invention and a degree of hydrophily on the surface by defining a contact angle as an indicator, where "●" indicates Example 3, "□" indicates Example 4, "○" indicates Conventional Example 3, "■" indicates Conventional Example 4, and "Δ" indicates Conventional Example 5.
FIGs. 9A and 9B are graphs each depicting decomposition of oil on a catalyst surface and depicting an XPS photo-electronic spectrum, where FIG. 9A indicates a state immediately after oil is applied to the catalyst surface, and FIG. 9B indicates a state after fluorescent light with its ultraviolet rays cut is emitted for 200 hours.
FIG. 10 is a graph depicting a relationship between the thickness of a silicon oxide film and a photocatalytic function when the photocatalytic function is expressed when the "C/Si" rate obtained by XPS measurement is defined as an indicator, where "○" indicates a state after engine oil is applied, and "●" indicates a state after a fluorescent light with its ultraviolet ray cut is irradiated for 120 hours.
FIG. 11 is a graph depicting a relationship between the thickness of the silicon oxide film and the photocatalytic function when the photocatalytic function is expressed when a water contact angle is defined as an indicator, where "○" indicates a state after engine oil is applied, and "●" indicates a state after a fluorescent light having a ultraviolet ray cut is irradiated for 120 hours.

### DETAILED DESCRIPTION OF THE PREFERRED EMBODIMENTS

Hereinafter, preferred embodiments of the present invention will be described with reference to the accompanying drawings.

The visible light response type photocatalyst of the present invention is such that a mixture layer of titanium oxide and silicon oxide and a silicon oxide layer are laminated in order onto a titanium oxide, and can be manufactured by using a variety of methods. Such producing methods include: PVD method such as vacuum vapor deposition or sputtering; CVD method using an organic metal component or the like; sol-gel method using an alkoxy body; coating method using a coating liquid that contains a complex alkyl ammonium salt solution such as EDTA; or the like. By using any of these methods, a titanium layer (film) is first formed on a substrate, a mixture layer (film) containing titanium oxide and silicon oxide is then laminated onto the titanium oxide layer (film), and thereafter, a silicon oxide layer (film) is laminated onto the mixture layer (film), thereby producing the photocatalyst.

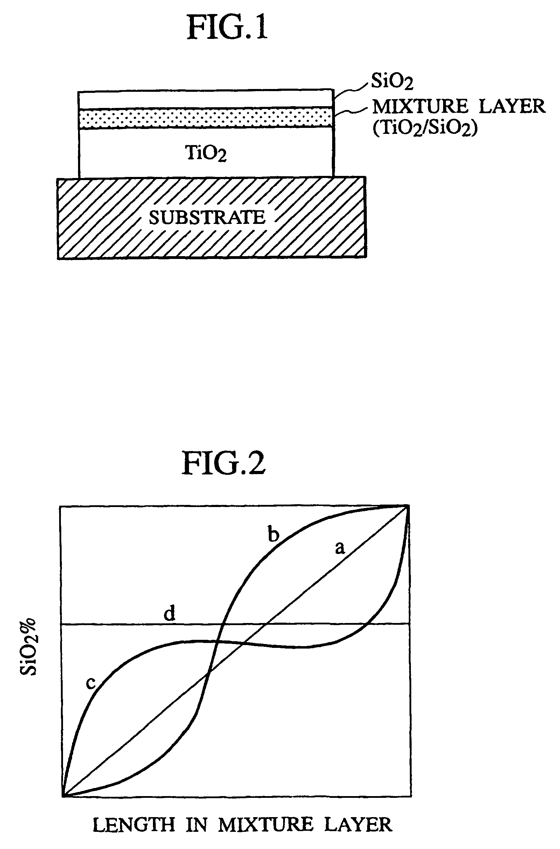

FIG. 1 schematically shows the obtained visible light response type photocatalyst of the invention.

In the present invention, it is important to laminate a mixture layer (film) on a titanium layer (film). In order to laminate such mixture layer (film), the filming process may be carried out in a state such that a titanium component and a silicon component are contained at the same time. Such mixture layer can be obtained as follows. That is, a titanium oxide or titanium and a silicon oxide or silicon are evaporated in an apparatus, and it's vapor is deposited on a substrate. Alternatively, in the sputtering method, these titanium oxide or titanium and a silicon oxide or silicon are employed as targets, are gasified at the same time, and the gasified targets are deposited on the substrate.

In addition, in the CVD method, the titanium component and the silicon component are supplied onto the substrate at the same time, and are reacted with each other, whereby the mixture layer can be formed. Further, in the sol-gel method or coating method, a liquid containing the titanium component and the silicon component is applied as a liquid onto the substrate, and filming is carried out, whereby the mixture layer can be formed.

Varying the relative quantities of the titanium component and the silicon component laminated on the substrate can control the existence ratio of titanium oxide to silicon oxide in the mixture layer. Specifically, in the case of vacuum vapor deposition, varying the relative quantities of titanium oxide (or titanium) and silicon oxide (or silicon) evaporated, by way of a two-dimensional vapor deposition technique can controls the existence rate. In addition, in the case of sputtering as well, varying the respective gasifying quantity by employing two sputter sources can control the existence rate. Further, in the CVD or sol-gel method, varying the relative quantities of the titanium component and the silicon component can control the existence ratio.

In cases the use of any of these methods, the existence ratio between the titanium component and the silicon component that form the mixture layer is prepared so that TiO₂ : SiO₂ = 5 to 95 : 95 to 5 or preferably 60 to 80 : 40 to 20 where these components are defined as the titanium oxide and silicon oxide.

In this case, the increase in quantity of SiO₂ becomes similar to a case in which only a SiO₂ layer is formed on a TiO₂ layer. Therefore, although visible lights make a slight response, a trap level produced by an interface between a TiO₂ layer and a mixture layer as described in the present invention is not obtained, and a behavior identical to normal TiO₂ photocatalyst is presented.

On the other hand, the increase in the quantity of TiO₂ becomes the same as a state in which the thickness of the TiO₂ layer is merely increased, and a TiO₂ photocatalyst identical to the conventional TiO₂ photocatalyst is obtained. In addition, in the case where SiO₂ is mixed with TiO₂ by several percentages, a TiO₂ anatase type crystal is not formed. As a result, diffusion onto the top surface of the positive hole produced by light excitation is inhibited. Thus, contamination decomposition properties that are an effect of photocatalytic properties are lowered, making it difficult to obtain a hydrophilic surface.

An example showing a state in which a titanium oxide and a silicon oxide exist in the sectional layer direction in the thus obtained mixture layer, is shown in FIG. 2.

FIG. 2 schematically shows an example of the state in which a titanium oxide and a silicon oxide exist in the sectional layer direction in the mixture layer, where the relative content rate of SiO₂ in the mixture layer is shown on a vertical axis , and a distance in the sectional layer direction is taken on a horizontal axis (FIG. 2 schematically shows the existence state, where numerical values are based on an arbitrary scale). FIG. 2 shows A: a case in which the SiO₂ ratio changes linearly at any length; (b) shows a case in which the SiO₂ ratio changes while a sigmoid curve is drawn; (c) shows a case in which SiO₂ ratio does not change in the intermediate portion of the length mixture; and (d) shows a case in which SiO₂ ratio is constant. The present invention may correspond to any of these four cases.

It is preferable to control the rate of the titanium oxide and the silicon oxide at the center of the mixture layer at TiO₂ : SiO₂ = 40 to 90 : 60 to 10 or preferably 50 to 80 : 50 to 20 as a percentage by weight.

Next, a vacuum vapor deposition is shown as a specific example. First, a titanium oxide and a silicon oxide that are vapor deposition materials are set respectively in a vacuum vapor deposition apparatus that comprises two evaporation sources, and a glass substrate is set therein. Then, the pressure in a vacuum chamber is evacuated to about 3 x 10⁻³ Pa by a vacuum pump, and at the same time, the glass substrate is heated at a predetermined set temperature (350°C) using a heater. After the pressure and temperature conditions have been adjusted, electron beams are emitted to the titanium oxide to heat the titanium oxide, and a shutter is opened to start vapor evaporation. The vapor deposition film thickness is be monitored by an optical film thickness gauge (OPM) or a crystal type film thickness gauge (XTC), and the set film thickness is obtained. Then, a shutter is closed, vapor deposition is terminated, and the titanium oxide layer is formed.

Then, electron beams are emitted to both of the titanium oxide and the silicon oxide, and the titanium oxide and the silicon oxide are heated. Next, both of these oxides are vapor deposited on the already formed titanium oxide layer at the same time, and a mixture layer is formed. Then, similarly, electron beams are irradiated only to the silicon oxide to heat the silicon oxide, and the silicon oxide layer is formed on the mixture layer, whereby the catalyst according to the present invention can be obtained.

Next, the present invention will be described in more detail by way of various Examples.

(1) First, the photocatalytic properties of the visible light response type photocatalyst according to the present invention were investigated as follows.

### Example 1

A 140 nm silicon oxide film being a barrier layer was vapor deposited onto a glass substrate by using a vacuum vapor deposition method, and then, a composite thin film including a titanium oxide layer, a mixture layer and a silicon oxide layer was produced. The film thickness of the respective layers was 300 nm, 20 nm, and 30 nm. The titanium oxide was of anatase type. The filming conditions are as shown in Table 1. The rate of the titanium oxide and the silicon oxide at the center of the mixture layer was 70 : 30 as a percentage by weight.

**Table 1**

| | TiO₂ film | Mixture film | SiO₂ film |
|---|---|---|---|
| Vapor deposition velocity (nm/sec) | 0.3 | 1.0 | 1.0 |
| Oxygen introduction pressure (Pa) | 2.67x10⁻² | 2.67x10⁻² | 2.67x10⁻² |
| Substrate temperature (°C) | 350 | 350 | 350 |

Polystyrene was spin coated onto this composite thin film, and light irradiation was carried out using nine types of wavelengths from 320 nm to 700 nm. Then, the catalytic activity of the visible light response type photocatalyst was investigated by measuring a degree of to which polystyrene was oxidized and degraded at each wavelength.

In addition, in Conventional Example 1, a 300 nm titanium oxide thin film was formed on a glass substrate, with a barrier layer provided thereon by the vacuum vapor deposition method as in Example 1, and a titanium oxide photocatalytic film with no mixture layer was produced. The photocatalytic activity was investigated according to the photocatalytic film obtained.

A photocatalytic oxidization and degradation reaction mechanism of polystyrene on the TiO₂ surface is considered as follows. First, light which is larger than the band gap energy is irradiated, whereby pairs of an electron and a positive hole ( excitons )are produced. Among them, the electron is linked with Ti⁴⁺ that is present in a TiO₂ bulk, the positive hole reacts with adsorption water on the TiO₂ surface, and active hydro radical (OH ·) is produced. It is estimated that this OH⁻ decimates a hydrogen of methylene of polystyrene, and aliphatic aldehyde is produced through main chain β cutting and the like.

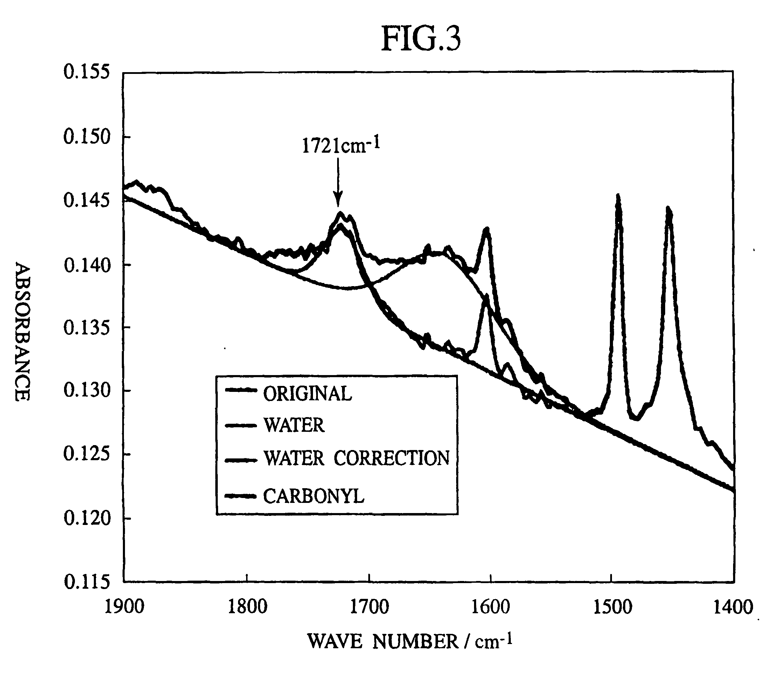

In order to discuss the wavelength dependency of the irradiated light in photocatalytic oxidization and degradation of polystyrene, IR spectra of the polystyrene layer after light emission (1.8 mol · photon/m²) were measured by microscopic ATR method using Ge prism. In FIG. 3, there is shown a case in which a mono-chromatic light of 350 nm was irradiated as an example of the IR spectra. A peak close to 1640 cm⁻¹ in the IR spectra is attributed to adsorption water, and a peak of 1494 cm⁻¹ is attributed to benzene ring skeleton vibration of polystyrene.

Then, difference spectra were obtained by approximating a peak of adsorption water from original spectra based on a Gauss-Lorenz curve, and water correction spectra were obtained. In the water correction spectra, a carbonyl peak close to 1721 cm⁻¹ was observed, and the advance was verified of photocatalytic oxidization.

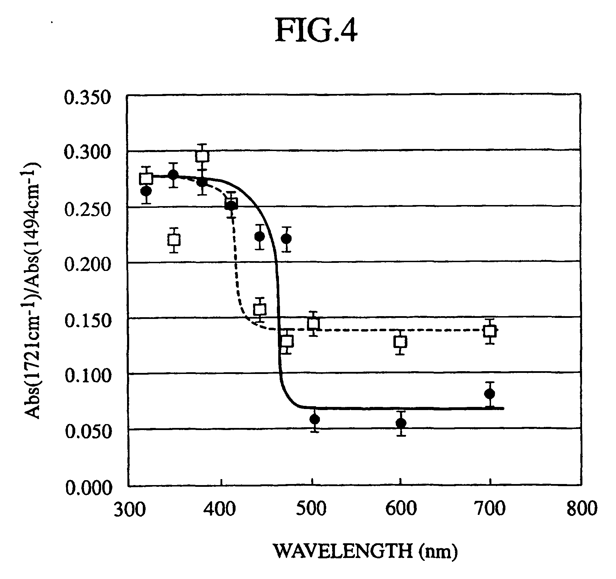

From the obtained result, the degree of advancement in light oxidization and degradation reaction of polystyrene were evaluated by a light absorption ratio of a C = O stretching vibration of 1721 cm⁻¹ to the benzene ring skeleton vibration of 1494 cm⁻¹. The results are shown in FIG. 4. FIG. 4 shows a light absorbance change of polystyrene in 1721 cm⁻¹ (C = O stretching vibration) produced by mono-chromatic light irradiation of 300 nm or longer which is not absorbed by polyethylene itself. From this figure, the oxidization of polystyrene on a conventional TiO₂ thin film occurs due to light irradiation of 410 nm or less in wavelength, and production of a carbonyl group is observed (indicated by "□"), and however, it is found that the reaction advances due to light irradiation of 470 nm or less in wavelength onto a composite thin film with a mixture layer according to the present invention provided thereon (indicated by "●"). Namely, the mixture layer is provided on the titanium oxide layer, whereby the thresholds of the photocatalytic oxidization reaction expand to include the visible light region, and it is found that the visible light response type photocatalyst according to the present invention was obtained.

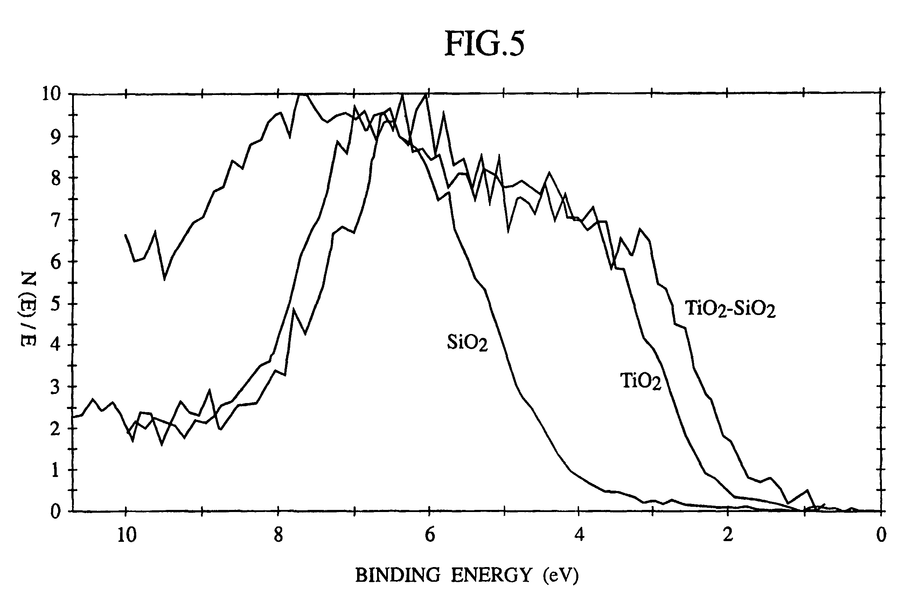

Further, regarding visible light response properties, measurement of the valence electron band region caused by an XPS (X-ray photo-electron spectroscopic analysis apparatus) was carried out. As a result, in the visible light response type catalyst according to the present invention, emission that cannot be found in any of TiO₂ and SiO₂ was observed at 3eV or less. The result is shown in FIG. 5. The result was obtained by measuring a mixture layer of about 2 to 5 nm in thickness formed on the titanium oxide. Although it is not the visible light response type photocatalyst itself in Example 1, in comprehensive view of the above result, it is considered that a substance with its different band gap comes into contact with anywhere, whereby a band distortion or lattice defect occurs, and an interfacial level is produced. Thus, it is estimated that the interfacial level is produced in a TiO₂ band gap that is essentially 3.2 eV (388 nm), and the threshold, which can produce excitons, changes to 470 nm, i.e., 2.6 eV.

(2) Next, the self-cleaning properties and hydrophilicity of the obtained visible light response type photocatalyst film were evaluated by a contact angle of which a water droplet is formed on the visible light response type photocatalyst film. The contact angle is an indicator that indicates the degree of wettability of a solid and a liquid. As the contact angle is smaller, the solid surface is wettable, and has hydrophilicity.

### Example 2

First, a composite thin film including a titanium oxide layer, a mixture layer, and a silicon oxide layer was directly produced on a glass substrate by using the vacuum vapor deposition method. The thickness of the respective layers was 200 nm, 100 nm, and 30 nm. The titanium oxide was of anatase type. The filming conditions are as shown in Table 2. The rate of the titanium oxide to silicon oxide at the center of the mixture layer was 70 : 30 as a percentage by weight.

**Table 2**

| | TiO₂ film | Mixture Film | SiO₂ film |
|---|---|---|---|
| Vapor deposition velocity (nm/sec) | 0.3 | 1.0 | 1.0 |
| Oxygen introduction pressure (Pa) | 2.67x10⁻² | 2.67x10⁻² | 2.67x10⁻² |
| Substrate temperature (°C) | 350 | 350 | 350 |

Then, a 0.1 wt.% dichloromethane solution of engine oil (castle motor oil), that is, a contamination source was applied to the obtained visible light response type photocatalyst film by way of dipping, and was dried, whereby a testing sample was produced.

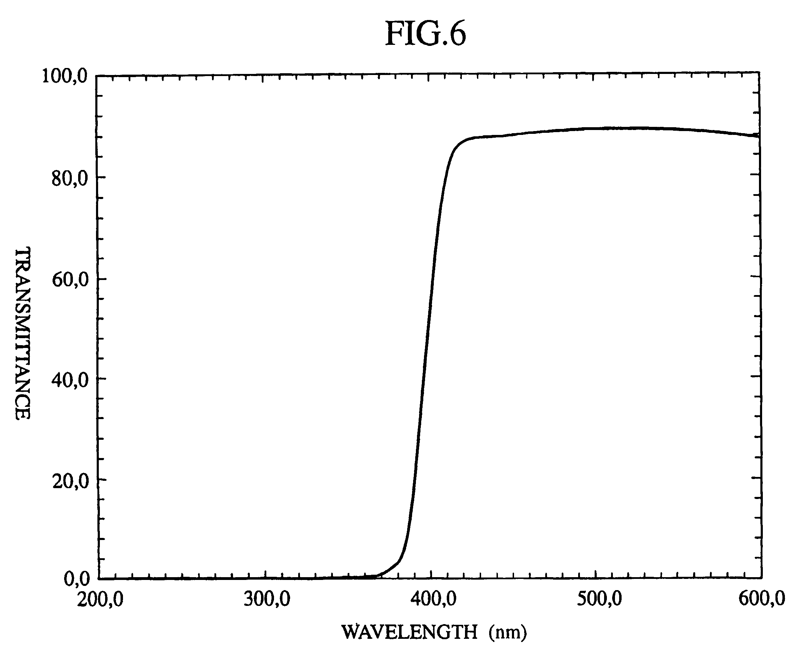

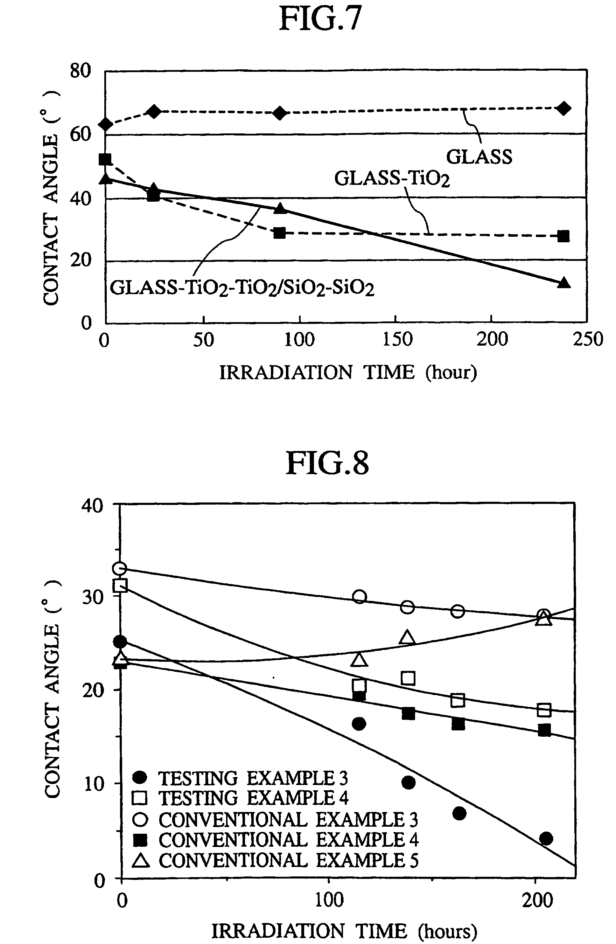

The light of a fluorescent lamp (National Palook 18W) was emitted onto this testing sample from a distance of 3 cm, via a ultraviolet-ray cutting glass (Lamirex UV FL3 + FL2, manufactured by Central Glass Co., Ltd. The spectroscopy characteristics are shown in FIG. 6), and the contact angle was measured with an elapse of time . As in Example 2, measurement was carried out in the case of a photocatalyst film (Conventional Example 2) in which a 200 nm titanium oxide layer was vapor deposited and in the case of only the glass substrate (Reference Example 1). The contact angle was measured relevant to pure water liquid droplets by using a contact angle gauge CA-X model manufactured by Kyowa Interface Science Co., Ltd. The measurement result is shown in Table 3 and FIG. 7.

The ultraviolet ray quantity on the testing sample surface was measured by a UV dosage gauge UVR-1 (manufactured by Topcon Corporation), and it was verified that the measurement was 0 mW/cm².

**Table 3**

| Emission time (hr) | Contact angle (°) | | |
|---|---|---|---|
| | Example 2 | Conventional Example 2 | Reference Example 1 |
| 0 | 46.9 | 52.4 | 63.3 |
| 24 | 43.1 | 40.8 | 67.2 |
| 90 | 37.3 | 29.1 | 66.5 |
| 238 | 12.5 | 27.7 | 67.5 |

The film surface on which engine oil (castle motor oil) was applied is water resistant. However, if this oil is decomposed by photocatalyst oxidation, the water resistance caused by the oil gradually decreases, and thus, the contact angle is lowered. As is evident from FIG. 7, no decomposition occurs on a glass substrate, and there is no change in the contact angle (Reference Example 1 where "glass" is represented). On the other hand, when a visible light response type photocatalyst with a titanium oxide layer, amixture layer, and a silicon oxide layer formed on a glass substrate (Example 2 where a "glass-TiO₂-TiO₂/SiO₂-SiO₂" is represented) is provided and when only a titanium layer is provided on a conventional glass substrate (Conventional Example 2 wherein a "glass-TiO₂" is represented), decomposition occurs, and the contact angle is lowered. In contrast, in the conventional photocatalyst, there is almost no change after about 100-hour light irradiation. This is considered to be because there is no ultraviolet-ray component in irradiation light, and thus, a photocatalyst cannot absorb light, and decomposition reaction stops for that reason. In contrast, in the visible light response type photocatalyst according to the present application, since a light absorption region expands to include visible light, it is considered that the light absorption region absorbs the light in the visible light region (about 400 to 470 nm), and a decomposition reaction occurs, resulting in a continued decrease in the contact angle.

Next, in order to investigate continuity of hydrophily relevant to the film obtained in Example 2 and Conventional Example 2, the result obtained by measuring contact angles relevant to samples left in dark room for four days is shown in Table 4.

**Table 4**

| Number of days on which samples were left in dark room | Contact angle (°) | |
|---|---|---|
| | Example 2 | Conventional Example 2 |
| 0 days | 1.5 | 5.5 |
| 4 days | 2.5 | 38 |

According to Table 4, it is found that the film formed by the visible light response type photocatalyst of the present invention can maintain hydrophily without light, and that the surface silicon oxide layer greatly contributes to maintenance of hydrophily.

(3) Next, the photocatalytic function and hydrophily was evaluated relevant to the visible light response type photocatalyst and hydrophilic film of the present invention produced by changing the filming conditions.

The samples (Examples 3 to 5 and Examples 3 and 4) were produced as follows.

### Example 3

A visible light response type photocatalyst was prepared in accordance with the procedures below.
1) TiO₂ and SiO₂, being vapor deposition materials, were set in a vacuum vapor deposition apparatus comprising two evaporation sources, and a glass substrate was set therein.
2) A door of the vacuum vapor deposition apparatus was closed, the inside of the vacuum chamber was evacuated up to 3 x 10⁻³ Pa, and the glass substrate was heated at a set temperature (350° C).
3) After the pressure and temperature conditions were established, oxygen (O₂) gas up to 2.6 x 10⁻² Pa was introduced into the vacuum chamber by employing an automatic pressure controller (APC).
4) Electron beams (EB) were emitted to TiO₂, and the TiO₂ was heated, a shutter was opened, and vapor deposition began.
5) The vapor deposition velocity of TiO₂ was set to 0.5 nm/s by using a crystalline film thickness gauge (XTC), and the entire film thickness was monitored by an optical film thickness gauge (OPM). An interference filter of about 460 nm in center wavelength (λ₀) was used, the shutter was closed at the time when (3/2) λ filming was carried out, and evaporation of TiO₂ was terminated.
6) The film thickness of the TiO₂ layer at this time was confirmed to be about 300 nm.
7) While TiO₂ was heated as is, SiO₂ set in another vapor deposition source was heated with electron beams (EB). At the same time, the shutter was opened, and a mixture layer of TiO₂ and SiO₂ was filmed. At this time, apart from TiO₂, the SiO₂ vapor deposition velocity was monitored by another crystalline film thickness gauge (XTC), and set to 1 nm/s.
8) After 15-second vapor deposition, the shutter was closed at the same time, and vapor deposition of the mixture layer was terminated. Then, the emission of TiO₂ electron beams (EB) was turned OFF.
9) The film thickness of the mixture layer at this time was measured, and it was confirmed that the measurement was about 20 nm. When the mixture ratio between TiO₂ and SiO₂ in this mixture layer was measured, TiO₂ : SiO₂ was about 60 : 40.
10) The SiO₂ evaporation source shutter was opened, the SiO₂ layer was vapor deposited for 45 seconds. Then, the shutter was closed, and vapor deposition of the SiO₂ layer was terminated.
11) The film thickness of the SiO₂ layer at this time was measured, and it was confirmed that the thickness was about 20 nm.

### Example 4

In accordance with the above steps 1) to 9), a sample was obtained when a TiO₂ layer (about 300 nm) and a mixture layer of TiO₂ and SiO₂ (about 20 nm, mixture ratio TiO₂ : SiO₂ = 60 : 40) were laminated, in order, onto the glass substrate.

### Conventional Example 3

In accordance with the above steps 1) to 6), a sample was obtained when only a TiO₂ layer (about 300 nm) was filmed on the glass substrate.

### Conventional Example 4

In accordance with the above steps 1) to 6) and steps 10) and 11), a sample was obtained when a TiO₂ layer (about 300 nm) and a SiO₂ layer (about 20 nm) were laminated onto the glass substrate.

### Conventional Example 5

In accordance with the above steps 10) and 11), a sample was obtained when only a SiO₂ layer (about 20 nm) was formed on the glass substrate.

In order to investigate the photocatalytic properties caused by ultraviolet-ray emission relevant to the obtained sample (Examples 3 and 4 and Conventional Examples 3 to 5), a 0.1 wt.% dichloromethane solution was applied onto a surface. A contact angle relevant to the water on the thus applied film surface was measured. Ultraviolet ray irradiation was carried out by using black light larnp(UVL-56 manufactured by Funakoshi Co., Ltd.) (ultraviolet ray quantity of 1 mW/cm²). The contact angle was measured in a manner similar to Example 2. The result is shown in Table 5.

**Table 5**

| | Contact angle (°) | | |
|---|---|---|---|
| | After filming | After oil is applied | Black light After 24 hours' irradiation |
| Example 3 | 5 or less | 27 | 5 or less |
| Example 4 | 5 or less | 35 | 5 or less |
| Conventional Example 3 | 8 | 41 | 12 |
| Conventional Example 4 | 5 or less | 24 | 5 or less |
| Conventional Example 5 | 5 or less | 25 | 27 |

As shown in Table 5, it is found that the contact angle after engine oil has been applied is comparatively low, and that contamination resistance is present in Examples 3 and Conventional Examples 4 and 5 in which the SiO₂ film is coated on a surface. In addition, the contact angle after a 24-hour irradiation of black light is lowered in the case where a TiO₂ film is present (Examples 3 and 4 and Conventional Examples 3 and 4), and the photocatalytic properties of TiO₂ was verified. On the other hand, in the case of only a SiO₂ layer of Conventional Example 5, although hydrophily was observed at the beginning of filming, the recovery of hydrophily was not obtained once the surface was contaminated.

Next, the photocatalytic function relevant to visible lights was evaluated by employing the same sample. That is, with the exception of samples made only of silicon oxide in Conventional Example 5, the same samples were used when photocatalytic properties were verified by ultraviolet-ray irradiation. By irradiating a high voltage mercury light to each sample, the dirt on the surface of each sample was decomposed and removed until the contact angle gauge had indicated 5 ° . Then, a 0.1 wt.% engine oil (castle motor oil) in dichloromethane solution was applied again onto the surface of each sample. Next, while the light of a fluorescent lamp (National Palook 18W) being a light source was irradiated to the samples from a distance of 3 cm via the ultraviolet-ray cutting glass, the water contact angle was measured with an elapse of time. The samples in Conventional Example 5 were similarly evaluated by employing new samples free of engine oil contamination. The result is shown in FIG. 8.

According to FIG. 8, the following findings were obtained.

In the samples of Example 3 according to the present invention, the contact angle decreased linearly with the elapse of an irradiation time, and a hydrophilic surface with 10° or less was finally obtained. The samples of Example 3 are found to have a decreased rate of a contact angle as compared with other samples, and have excellent photocatalytic properties excited by visible lights. In addition, a mixture layer was provided on a TiO₂ layer relevant to the samples of Example 4 as well, and a potential gradient (Schottky barrier) was produced on an interface between the TiO₂ layer and the mixture layer. Thus, in the samples of Example 4, it is found that an interfacacial level is formed, a trap level that can be excited by visible lights is formed, and a photocatalytic function caused by visible lights is provided. However, a decrease in the contact angle relevant to the irradiation time is not linear unlike the case of Example 3. This difference can be caused by an effect attained by the SiO₂ layer provided on the mixture layer. Namely, this is considered to be because a positive hole itself produced by excitation caused by visible lights, a hydroxy radical produced by the positive hole oxidizing water, or an oxygen radical (active oxygen) being an oxygen reduction product (such as ^{·}O₂) caused by electron, can constantly exist in the SiO₂ layer, or alternatively, a hydroxy radical can form a stable silanol (Si-OH) group on the SiO₂ surface. In particular, it is considered that the silanol group greatly influences the SiO₂ surface in that hydrophily is provided to the surface in order to decrease the contact angle.

In addition, in Conventional Examples 3 and 4 in which no mixture layer is provided as well, it is found that the contact angle decreases slightly, and decomposition is caused by visible light. This is considered to be because a TiO₂ layer filmed by vacuum vapor deposition is polycrystalline and is likely to have a lattice defect, and thus, a slight response to visible lights with their short wavelengths is made by these influences, and the water contact angle on the film surface is lowered to some extent at the initial state of visible light irradiation. However, the capability of visible light response is insufficient as compared with a photocatalyst having a mixture layer according to the present invention.

As has been described above, according to the present invention, it is found that a mixture layer is provide on a TiO₂ layer, whereby a visible light response type photocatalyst can be obtained. The SiO₂ layer provided on the mixture layer diffuses a positive hole or the like produced by excitation of visible lights. Thus, there is a possibility that a composite film according to the present invention, the composite film having electric conductivity and including a TiO₂ layer, a mixture layer, and a SiO₂ layer functions as a photoconductive film.

It is found that this catalyst is reproduced after contamination, as in this Test, and can be used without any problem.

Next, the continuity of hydrophily was evaluated relevant to the samples of Examples 3 and 4 and Conventional Examples 3 to 5. A high voltage mercury light was irradiated to each sample employing the same samples in which photocatalytic properties were verified by visible light irradiation. In this manner, after the water contact angle with the sample had recognized to be 5° or less, these samples were left in a window free thermostat (room temperature and no wind state) for one month, and the contact angle was measured. The samples of Conventional Example 5 were evaluated similarly by employing new samples that are not contaminated by engine oil. The result is shown in Table 6.

**Table 6**

| | Contact angle (° ) | |
|---|---|---|
| | Initial value | Value obtained after one month |
| Example 3 | 5 or less | 5 or less |
| Example 4 | 5 or less | 32 |
| Conventional Example 3 | 5 or less | 49 |
| Conventional Example 4 | 5 or less | 5 or less |
| Conventional Example 5 | 5 or less | 5 or less |

According to Table 6, it is found that the samples of Example 3 and Conventional Examples 4 and 5 whose surfaces are fully covered with the SiO₂ layer maintain hydrophily for a long period of time. In contrast, it is found that, if TiO₂ is fully exposed to the surface (Conventional Example 3) or is partially exposed as a mixture layer (Example 4), the hydrophily maintenance capability is poor.

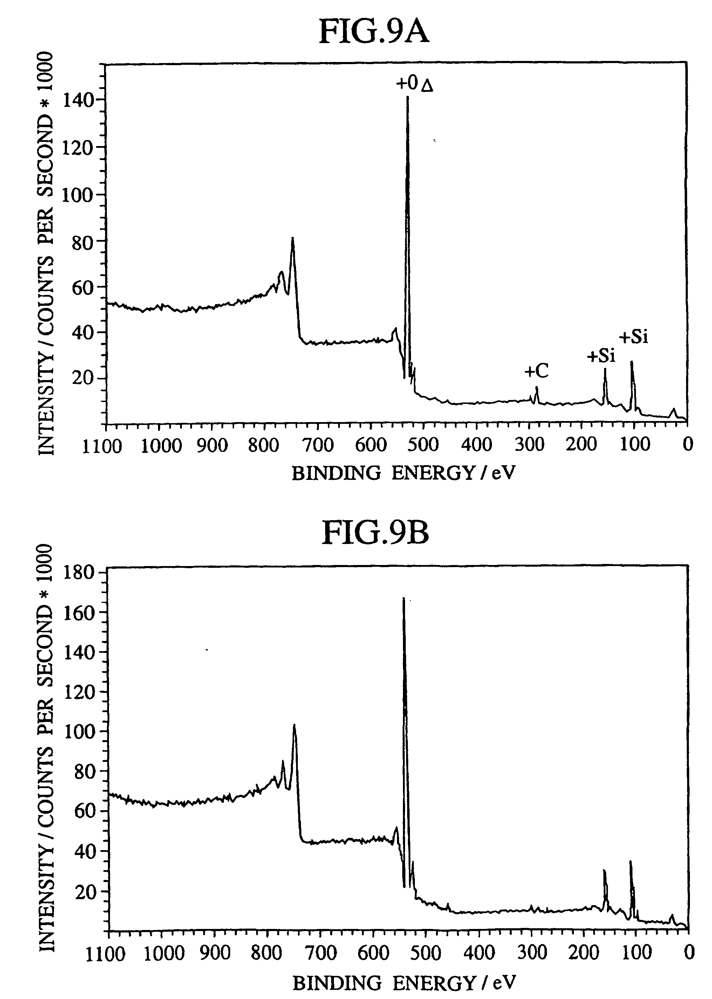

Next, the light decomposition action toward organic materials was verified by employing the samples of Example 3. That is, a 0.1 wt.% engine oil (castle motor oil) in dichloromethane solution was applied to the surface of each of the newly produced samples . Then , the existence ratio of atoms in about several nm from the catalyst surface was obtained by measuring photoelectron spectra using XPS. The rate of "C/Si" was calculated from a quantity of carbon "C" deriving from engine oil that exists on the catalyst surface and a quantity of silicon "Si" on the catalyst surface, and this value was defined as a scale of decomposition of organic materials. The smaller value indicates that the decomposition of organic materials advances more significantly. FIG. 9A shows XPS spectra obtained when engine oil is applied to the samples of Example 3 relevant to the photocatalytic properties of visible light response concerning the decomposition of organic materials. FIG. 9B shows XPS spectra 200 hours after irradiating fluorescent light whose ultraviolet rays are cut.

According to FIGs. 9A and 9B, as shown in FIG. 9A, it is found that a peak of oxygen, carbon, and silicon is observed after the oil has been applied. In contrast, it is found that a peak of carbon decreases from among peaks of the respective elements at the same positions after irradiating fluorescent light whose ultraviolet rays are cut. In order to obtain this quantitatively, attention was paid to carbon caused by oil and silicon that is an element constituting the photocatalyst surface, an area value of the peak of carbon is obtained relevant to the area value of a total of two peaks of silicon, and the "C/Si" value was obtained. It is found that, although the "C/Si" value indicating the degree of decomposition of this organic material indicates 0.47 in (a) initial value, 0.08 is obtained after 200-hour fluorescent light emission, and light decomposition of organic materials occurs due to fluorescent light without ultraviolet rays, i.e., visible lights.

### (4) Discussion of Thickness of Silicon Oxide Layer

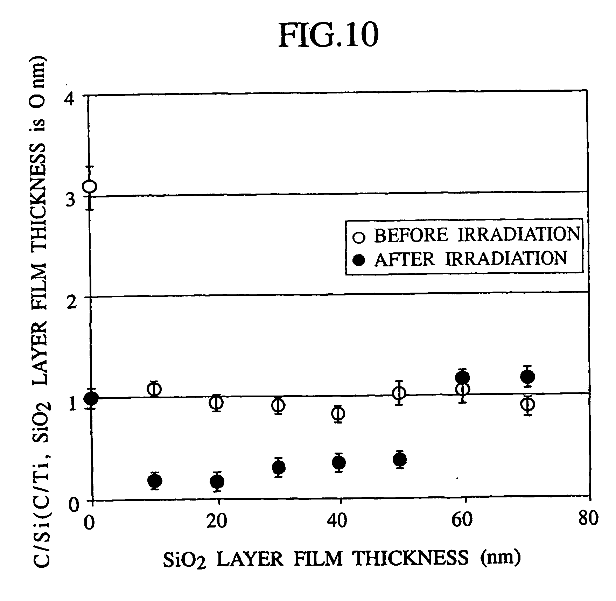

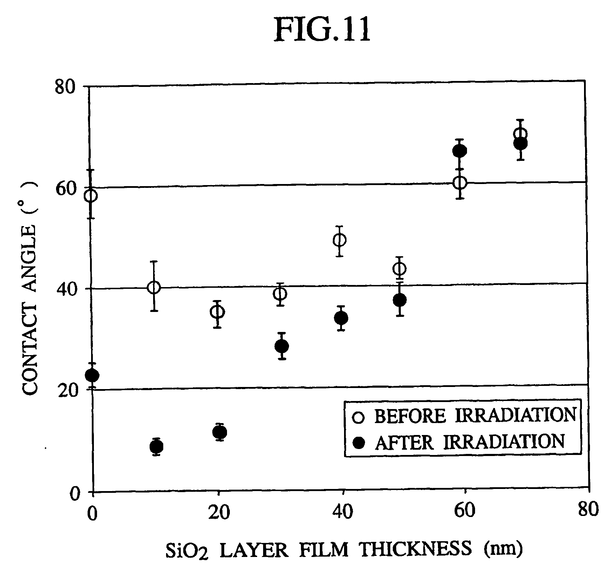

Next, samples with the film thickness of the silicon oxide layer changed were produced (Examples 5 to 12) by using a method that is substantially similar to the producing method shown in Example 3 describing Test (3) in which the photocatalytic function and hydrophily were evaluated relevant to the visible light response type photocatalyst and hydrophilic film according to the present invention produced by changing the filming conditions. The film thickness of the obtained samples were 280 nm in titanium oxide layer, 15 nm in mixture layer, and TiO₂ : SiO₂ = 55 : 45 in percentage by weight. The film thickness of the silicon oxide layer was changed from 0 to 70 nm. With respect to these samples, a 0.1 wt.% engine oil (castle motor oil) in dichloromethane solution was applied to the sample surface in a manner similar to the above Test (3). Then, the samples were irradiated for 120 hours by a fluorescent lamp whose ultraviolet rays were cut. Then the decomposition properties of organic materials on the catalysis surface and the water contact angle were measured by XPS relevant to the irradiated samples. And the photocatalytic performance of the samples was investigated. The result is shown in FIG. 10 and FIG. 11. In each of these figures, "○" indicates the state after an engine oil has been applied, and "●" indicates the state after emitting fluorescent light with cut ultraviolet rays for 120 hours.

According to FIG. 10 and FIG. 11, it is found that the film thickness of silicon oxide is preferably 60 nm or less. This would be caused by the diffusing properties of the positive hole in the silicon oxide layer. If a silicon oxide layer is not provided, the "C/Ti" ratio increases. However, since silicon is decomposed into about 1/3, it is understood that the photocatalytic function is provided.

### (5) Discussion of Thickness of Mixture Layer

Next, samples with the film thickness of the mixture layer changed were produced (Conventional Example 6 and Examples 13 to 18), and the effect of the film thickness of the mixture layer was investigated by changing the mixture layer filming time in a manner substantially similar to the producing method shown in Example 3 describing Test (3) in which the photocatalytic function and hydrophily were evaluated relevant to the visible light response type photocatalyst and hydrophilic film according to the present invention produced by changing the filming conditions. The samples of Conventional Example 6 and Example 14 were produced under the same conditions as those in the above described Conventional Example 4 and Example 3, and correspond to samples in these examples.

With respect to each of the obtained samples, as in the above Test (3), a 0.1 wt. engine oil (castle motor oil) in dichloromethane solution was applied to the sample surface. Then, light emission was carried out by employing a fluorescent light with cut ultraviolet rays, the water contact angle was measured with an elapse of time, and the photocatalytic performance was investigated. The result was shown in Table 7 in the case of 120-hour irradiation.

**Table 7**

| | Filming time (seconds ) | Film thickness (nm) | Contact angle (°) | | Decrease rate (%) |
|---|---|---|---|---|---|
| | | | After oil is applied | After irradiation | |
| Conventional Example 6 | 0 | 0 | 29 | 19 | 34 |
| Example 13 | 10 | 8 | 31 | 10 | 68 |
| Example 14 | 15 | 20 | 27 | 8 | 70 |
| Example 15 | 20 | 33 | 28 | 12 | 57 |
| Example 16 | 25 | 41 | 30 | 21 | 30 |
| Example 17 | 30 | 52 | 27 | 25 | 7 |
| Example 18 | 40 | 68 | 28 | 28 | 0 |

According to Table 7, the samples of Examples 13, 14, and 15 each had a great decrease rate in contact angle relevant to the samples obtained by laminating a silicon oxide layer on the titanium oxide layer of Conventional Example 6. The film thickness of the mixture layer at this time was 8 to 33 nm. Although the contact angle is observed to have been lowered in the samples with larger film thickness, the degree of this decrease tends to decrease depending on the film thickness of the mixture layer. This would be caused by an effect of diffusing of the positive hole caused in the vicinity of an interface between the titanium oxide and the mixture layer. If the mixture layer is thick enough, it is considered that the positive hole produced by absorption of visible lights hardly appears on the surface. That is, both the mixture layer and the silicon oxide layer are considered to have an effect on diffusing of the positive hole caused by the interface between the titanium oxide layer and the mixture layer.

Next, with respect to each sample that has been discussed above, the sample was set below the measurement limit of the contact angle meter whose water contact angle is 5° or less, irradiated by a high voltage mercury lamp light. Then, these samples were left in a thermostat with no window (room temperature and no wind state) for one month, and the contact angle was measured. The samples of any of Examples 13 to 18 were 5° or less, and it was verified that hydrophily is maintained for a long period of time.

It should be understood that the foregoing relates to only a preferred embodiment of the invention, and it is intended to cover all changes and modifications of the examples of the invention herein chosen for the purposes of the disclosure, which do not constitute departures from the scope of the claimed invention.

## Claims

1. A visible light response type photocatalyst comprising a titanium oxide, a mixture layer of titanium oxide and silicon oxide, and a silicon oxide layer, wherein the mixture layer and the silicon oxide layer are laminated, in order, onto the titanium oxide.

2. The visible light response type photocatalyst according to claim 1, wherein a thickness of said mixture layer is 2 to 50 nm, and a mixture rate of titanium oxide to silicon oxide is TiO₂ : SiO₂ = 5 to 95 to 95 to 5 in percentage by weight.

3. The visible light response type photocatalyst according to claim 1, wherein a thickness of said silicon oxide layer is 5 to 60 nm.

4. The visible light response type photocatalyst according to claim 2, wherein a thickness of said silicon oxide layer is 5 to 60 nm.

5. A hydrophilic film having self cleaning properties, comprising a substrate, a titanium oxide layer, amixture layer of titanium oxide and silicon oxide, and a silicon oxide layer, wherein the titanium oxide layer, the mixture layer, and the silicon oxide layer are laminated, in order, onto the substrate.

6. The hydrophilic film having self cleaning properties according to claim 5, wherein a thickness of said mixture layer is 2 to 50 nm, a mixture rate of titanium oxide and silicon oxide is TiO₂ : SiO₂ = 5 to 95 : 95 to 5 in percentage by weight.

7. The hydrophilic film having self-cleaning properties according to claim 5, wherein a thickness of said silicon oxide layer is 5 to 60 nm.

8. The hydrophilic film having self-cleaning properties according to claim 6, wherein the thickness of said silicon oxide layer is 5 to 60 nm.

## Patentansprüche

1. Ein für sichtbares Licht empfindlicher Fotokatalysator, der ein Titanoxid, eine gemischte Schicht aus Titanoxid und Siliziumoxid und eine Siliziumoxidschicht umfasst, worin die gemischte Schicht und die Siliziumoxidschicht in der Reihenfolge auf das Titanoxid laminiert sind.

2. Der für sichtbares Licht empfindliche Fotokatalysator gemäß Anspruch 1, worin eine Dicke besagter gemischter Schicht 2 bis 50 nm beträgt und ein Mischungsverhältnis von Titanoxid zu Siliziumoxid TiO₂ : SiO₂ = 5 bis 95 bis 95 bis 5 in Gewichtsprozent beträgt.

3. Der für sichtbares Licht empfindliche Fotokatalysator gemäß Anspruch 1, worin eine Dicke von besagter Siliziumoxidschicht 5 bis 60 nm beträgt.

4. Der für sichtbares Licht empfindliche Fotokatalysator gemäß Anspruch 2, worin eine Dicke von besagter Siliziumoxidschicht 5 bis 60 nm beträgt.

5. Ein hydrophiler Film mit selbstreinigenden Eigenschaften, der ein Substrat, eine Titanoxidschicht, eine gemischte Schicht aus Titanoxid und Siliziumoxid und eine Siliziumoxidschicht umfasst, worin die Titanoxidschicht, die gemischte Schicht und die Siliziumoxidschicht in der Reihenfolge auf das Substrat laminiert sind.

6. Der hydrophile Film mit selbstreinigenden Eigenschaften gemäß Anspruch 5, worin eine Dicke besagter gemischter Schicht 2 bis 50 nm beträgt und ein Mischungsverhältnis von Titanoxid und Siliziumoxid TiO₂ : SiO₂ = 5 bis 95 bis 95 bis 5 in Gewichtsprozent beträgt.

7. Der hydrophile Film mit selbstreinigenden Eigenschaften gemäß Anspruch 5, worin eine Dicke besagter Siliziumoxidschicht 5 bis 60 nm beträgt.

8. Der hydrophile Film mit selbstreinigenden Eigenschaften gemäß Anspruch 6, worin die Dicke von besagter Siliziumoxidschicht 5 bis 60 nm beträgt.

## Revendications

1. Catalyseur photosensible du type sensible à la lumière visible comprenant un oxyde de titane, une couche de mélange d'oxyde de titane et d'oxyde de silicium, et une couche d'oxyde de silicium, dans lequel la couche de mélange et la couche d'oxyde de silicium sont stratifiées, dans cet ordre, sur l'oxyde de titane.

2. Catalyseur photosensible du type sensible à la lumière visible selon la revendication 1, dans lequel l'épaisseur de ladite couche de mélange est comprise entre 2 et 50 nm, et le rapport de mélange de l'oxyde de titane sur l'oxyde de silicium est TiO₂ / SiO₂ = 5 à 95 % / 95 à 5 % en poids.

3. Catalyseur photosensible du type sensible à la lumière visible selon la revendication 1, dans lequel l'épaisseur de ladite couche d'oxyde de silicium est comprise entre 5 et 60 nm.

4. Catalyseur photosensible du type sensible à la lumière visible selon la revendication 2, dans lequel l'épaisseur de ladite couche d'oxyde de silicium est comprise entre 5 et 60 nm.

5. Film hydrophile ayant des propriétés autonettoyantes, comprenant un substrat, une couche d'oxyde de titane, une couche de mélange d'oxyde de titane et d'oxyde de silicium et une couche d'oxyde de silicium, dans lequel la couche d'oxyde de titane, la couche de mélange et la couche d'oxyde de silicium sont stratifiées, dans cet ordre, sur le substrat.

6. Film hydrophile ayant des propriétés autonettoyantes selon la revendication 5, dans lequel l'épaisseur de ladite couche de mélange est comprise entre 2 et 50 nm, le rapport de mélange de l'oxyde de titane sur l'oxyde de silicium est TiO₂ / SiO₂ = 5 à 95 % / 95 à 5 % en poids.

7. Film hydrophile ayant des propriétés autonettoyantes selon la revendication 5, dans lequel l'épaisseur de ladite couche d'oxyde de silicium est comprise entre 5 et 60 nm.

8. Film hydrophile ayant des propriétés autonettoyantes selon la revendication 6, dans lequel l'épaisseur de ladite couche d'oxyde de silicium est comprise entre 5 et 60 nm.
